Europäisches Patentamt

European Patent Office

Office européen des brevets

(19)

(11) Publication number: **0 095 913**
**B1**

(12) **EUROPEAN PATENT SPECIFICATION**

(45) Date of publication of patent specification: **23.10.85**

(51) Int. Cl.⁴: **C 05 C 9/02**

(21) Application number: **83303081.0**

(22) Date of filing: **27.05.83**

(54) A process for preparing fertilizers.

(30) Priority: **27.05.82 IT 2150882**

(43) Date of publication of application:
**07.12.83 Bulletin 83/49**

(45) Publication of the grant of the patent:
**23.10.85 Bulletin 85/43**

(84) Designated Contracting States:
**BE DE FR GB NL**

(56) References cited:
**FR-A-1 570 129**
**FR-A-2 047 754**
**FR-A-2 270 221**
**FR-A-2 429 194**
**GB-A- 737 468**
**GB-A- 869 362**
**GB-A-1 153 946**
**US-A-4 145 207**

(73) Proprietor: **Montedison S.p.A.**
**31, Foro Buonaparte**
**I-20121 Milan (IT)**

(72) Inventor: **Monaldi, Remo**
**42, Via Genova**
**Mestre Venezia (IT)**
Inventor: **Fortibuoni, Raffaello**
**25/40, Via Longhena**
**Porto Marghera Venezia (IT)**

(74) Representative: **Whalley, Kevin et al**
**Marks & Clerk 57/60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for preparing fertilizers, releasing nitrogen slowly. More particularly the invention relates to the preparation of fertilizers containing ureaform and at least one other fertilizing substance.

It is known that urea reacts with formaldehyde in an aqueous medium to form insoluble condensation products consisting of polymethylenepolyureas having various molecular weights, which are commercially known as ureaform. After soil manuring, ureaform gradually depolymerizes by forming soluble nitrogenous compounds and therefore it acts as a fertilizing material releasing nitrogen slowly. The agronomical value of the ureaform is expressed by its activity index, which is indicative of the solubilization velocity of the water-insoluble nitrogen. This index and the manner of determining it are described in "The Official Methods of Analysis of the Association of Official Analytical Chemists", edited by William Horwitz, 30th edition, 1980, page 17. The optimum value of the activity index ranges from 40 to 60.

The NPK complex fertilizers containing ureaform are prepared by means of one of the following methods:

(1) in a first method, solid ureaform is prepared in powdered or granular form and is added to other nitrogenous, phosphatic and potassic matter;

(2) in a second method the ureaform is prepared in an aqueous suspension and the suspension is added to other nitrogenous, phosphatic and potassic matter;.

(3) in a third method, the ureaform is prepared "in situ" by reacting urea and formaldehyde in the presence of other nitrogenous, phosphatic and potassic matter.

The first method is expensive, because it requires a filtration step of the ureaform produced in the aqueous phase, the drying and the optional granulation thereof; then a subsequent working stage is necessary for the addition of the ureaform to the other fertilizing matter.

The second method presents the drawback of needing a very careful control of the reaction conditions, to obtain a suspension with a constantly stable degree of polymerization and therefore to avoid excessive polycondensation, which, besides reducing the agronomical value of the ureaform, could adversely affect the ease of treatment thereof in the subsequent working stage, which in this case too is necessary for the addition of the ureaform to the other fertilizing matter.

The third method presents the drawback of a lower reaction yield between urea and formaldehyde, owing to the scarce amount of water in the system, which prevents complete dissolution of the urea; furthermore this method required strict control of the product temperature during the granulation stage.

The present invention aims to provide a process for preparing fertilizers containing ureaform and at least one other fertilizing substance, that allows a product to be obtained with a constant activity index from 40 to 60, which process may be operated under less critical conditions and therefore have a higher working flexibility.

The present invention provides a process for preparing a fertilizer containing ureaform and at least one other fertilizing substance, comprising the steps of:

(a) reacting urea and formaldehyde in an aqueous phase at a temperature from 30° to 60°C, in molar ratios of urea/formaldehyde of from 1.2:1 to 2:1 and of water/urea of from 0.7:1 to 10:1, and at a pH of from 2 to 4, by addition of an acid substance;

(b) mixing the thus obtained ureaform aqueous suspension with at least one other fertilizing substance and with a part of the recycled final product, which said part is sufficient to ensure in the mixture a pH from 4 to 5.5, and granulating the mixture at a temperature from 50° to 85°C;

(c) before the granulation ends, increasing the product pH to a value from 5.8 to 7 by addition of an alkaline substance; and

(d) drying the product, and recycling a part thereof to the said step (b).

In the process according to the invention the polycondensation of urea with formaldehyde takes place in two steps; that is, the polycondensation starts in liquid phase at pH 2—4 in the first step and continues in solid phase at pH 4—5.5 in the second step in the presence of the other fertilizing substance or substances and of a part of the recycled final product, while proceeding to the granulation. Subsequently the polycondensation is stopped by increasing the pH to 5.8—7, before the granulation ends.

In the polycondensation stage in liquid phase, the pH of the urea and formaldehyde solution is kept at 2—4 by addition of an acid substance. Preferably this substance is selected such that its neutralization, which is completed in the third step, gives rise to a fertilizing substance; thus, for example, use may be made of diluted (for example 10—20% by weight) phosphoric or sulphuric acid, which, in the third step, converts into ammonium phosphate or ammonium sulphate, if the alkaline substance of the third step is ammonia.

The urea and the formaldehyde may be fed to the first step in any form; in particular the urea may be supplied in solid form or may be already in aqueous solution, and the formaldehyde may be supplied in gaseous form or in aqueous solution. A commercial solution of urea and formaldehyde may also be used, such as, for example, Formurea 80 produced by Montedison S.p.A., which contains about 57% of formaldehyde, about 23% of urea and about 20% of water; in this case, urea and water are also employed, in order to obtain the above indicated molar ratios of urea/formaldehyde and water/urea.

**0 095 913**

The reaction time in liquid phase generally ranges from 0.5 to 3 hours, more preferably from 1.5 to 2.5 hours.

At the end of the reaction there is obtained a slurry of condensed ureaform in uniform suspension in the aqueous medium.

The molar ratio urea/formaldehyde in the first step is preferably from 1.4:1 to 1.8:1, while the molar ratio water/urea in the first step is preferably from 1.0:1 to 2.0:1.

The pH in the first step is preferably from 3.0 to 3.5.

The reaction temperature in the first step is preferably from 40° to 55°C.

The various substances entering the first stage may be fed directly into the condensation reactor; this procedure is particularly suitable when urea in solution is available. If no urea in solution is available, it is preferable to feed the water, the formaldehyde and the urea into a mixing reactor, thereby forming a homogeneous solution, which, together with the acid substance, is fed into the condensation reactor. In this case, the solution temperature in the mixing reactor is regulated at a temperature generally comprised from 20° to 40°C and more preferably from 20° to 30°C; by means of such regulation and by exploiting the exothermicity of the condensation reactions, the temperature in the condensation reactor can be easily maintained at the chosen value.

The ureaform suspension, a part of the recycled final product and at least one other fertilizing substance are fed into the second stage, where the polycondensation in solid phase and the granulation of the fertilizer take place.

By appropriately selecting the other fertilizing substance or substances, final products can be obtained based on only nitrogen, on nitrogen and phosphorus, on nitrogen and potassium, or on nitrogen, phosphorus and potassium. Among the fertilizing substances which can be added there are, for example urea, ammonium sulphate, ammonium nitrate, superphosphate, supertriple, phosphoric acid, ammonium phosphates having different degrees of ammonization in the solid state or in aqueous suspension, potassium chloride and potassium sulphate. Other substances may be also added, for example diluents, magnesium salts (for example more or less hydrated magnesium sulphate) or salts which supply microelements, such as for example iron, zinc, manganese and boron.

The pH in the second step is maintained at values from 4.0 to 5.5. Taking into account that the pH of the ureaform aqueous suspension (2.0—4.0) is lower than such values, the pH in the second step is increased by recycling a part of the final product which has a pH comprised from 5.8 to 7. The recycling of the final product may also be used for compensating for the acidity of acid ingredients, such as for example the phosphoric acid or the superphosphate. In these cases, the pH is kept within the range of 4.0—5.5 by dosing both the recycled part and the quantity of acid ingredients. The best results are usually obtained by keeping the pH within the range of 4.5—5.5.

The recycled part ratio is generally comprised from 3:1 to 7:1, and more preferably from 4:1 to 6:1.

The fertilizer granulation takes place simultaneously with the polycondensation reaction. The operation time is regulated as a function of the granulation requirements. The granulation is carried out at a temperature from 50° to 85°C; the best results are usually obtained at temperatures from 70 to 80°C. When necessary, heating is provided, for example by means of steam.

Before the granulation ends, the product pH is increased to from 5.8 to 7 by addition of an alkaline substance, such as for example ammonia or calcium hydroxide. Preferably use is made of gaseous ammonia. The pH increase stabilizes the polymerization degree of the ureaform since, at pH values from 5.8 to 7, the polycondensation reaction stops. Preferably the pH is increased to from 6.0 to 6.5.

The stage of granulation and polycondensation in solid phase and that of stabilization of the product pH can be carried out in a single apparatus, in the terminal part of which means are provided for the feeding of the alkaline substance. This means can be arrranged, for example, between the seventh-tenth and ninth-tenth of the apparatus length.

The possibility of using a single apparatus to carry out these various operations is a particular advantage of the present invention. However, the stage of granulation and polycondensation in solid phase and that of stabilization of the product pH may be also carried out in two separate apparatuses. The single apparatus or the two apparatuses may consist, for example, of granulating drums or of granulating screws. The granulation continues during and after the addition of the alkaline substance, until the product comes out of the apparatus.

The product brought to pH 5.8—7.0 is successively dried, in a drier of conventional type, until a residual moisture content, for example of 1—2%, is reached. The drying is generally carried out at a temperature from 85° to 100°C, and more preferably at a temperature from 90 to 95°C. The dried product is then subjected to a granulometric classification; the fractions under and over measure (this last is ground), together with a part of the product having the desired measure, form the recycled part that is sent back to the stage of granulation and completion of the polycondensation.

The product is preferably cooled below 45°C, before being stored.

The main advantages of the present invention may be summarized as follows:

— there may be obtained fertilizers with high and constant chemical and physical characteristics, having an activity index in nitrogen ranging from 40 to 60 and always constant;

3

— the process is economic and it is possible to operate under less critical conditions, in comparison with the previously known methods, and therefore it is possible to operate with a higher working flexibility;

— it is possible to obtain a large number of nitrogenous, nitrogenous and phosphatic, nitrogenous and potassic, and nitrogenous, phosphatic and potassic fertilizers having different ratios among the fertilizing elements and a slow-release nitrogen content up to 50—60% of the total nitrogen;

— it is possible to carry out the whole production cycle by utilizing existing plant for the production of non-slow-release fertilizers, by making only small changes, which are not substantial from the economic point of view;

— the operations of granulation and polycondensation in solid phase and of stabilization of the product pH may be carried out in a single apparatus.

The invention will be further described with reference to the following illustrative Examples. All percentages are by weight, if not otherwise indicated.

Example 1

A 15.7.7S fertilizer, free from chlorine, was produced by operating continuously as follows (the specified amounts refer to a metric ton of final product).

145 kg. of a commercial solution of Formurea 80 (57% of formaldehyde, 23% of urea, 20% of water), 253 kg. of urea (46% of N), and 80 kg. of water were uniformly mixed and brought to a temperature of 20°C in an open reactor under stirring, thereby obtaining a solution having a molar ratio of urea/formaldehyde of 1.73:1 and a molar ratio of water/urea of 1.27:1, with a pH of 6.0.

The solution was transferred through an overflow into a second reactor under stirring, where 6.2 kg. of an aqueous solution of $H_3PO_4$ (4% of $P_2O_5$) were added, in order to obtain a pH of 3.5 in the reaction mixture.

In this second reactor the temperature became stable at 50°C because of the heat developed by the condensation reaction between urea and formaldehyde. The average residence time of the solution in the reactor was 2 hours.

The thus produced ureaform suspension, equivalent to 462 kg., was directly fed, always continuously and without stopping the working cycle, into a drum granulator, where 407 kg. of 0.18.0 superphosphate, 56 kg. of ammonium sulphate, 147 kg. of potassium sulphate (50% of $K_2O$), and 80 kg. of an inert material (sand), together with 5,000 kg. of recycled product (having a moisture content of 1.5%) coming from a preceding processing, were added.

The product pH during the granulation was 5.5 and the temperature 72°C.

The product was then ammoniated in the terminal part of the granulator by addition of 18 kg. of gaseous ammonia. The pH value at the granulator outlet was 6.0.

The fertilizer coming out of the granulator, having a moisture content of 5.9%, was dried to a moisture content of 1.5% in a drier at a temperature of 95°C and successively screened. The fraction comprised between 1 and 4 mm forms the final product, while the appropriately ground coarse fraction and the fine fraction form the recycle, which is integrated with a part of the final product.

The thus prepared fertilizer was found upon analysis to have the following composition:

| | |
|---|---|
| — ammoniac nitrogen | 2.55% |
| — ureic nitrogen | 6.45% |
| — water-insoluble nitrogen | 6.20% |
| — total nitrogen | 15.20% |
| — water- and ammonium citrate-soluble $P_2O_5$ | 7.20% |
| — $K_2O$ | 7.20% |
| — moisture | 1.50% |
| — activity index | 46 |

The caking, hardness and friability characteristics of the granules were comparable to those of a conventional high-quality NPK fertilizer.

Example 2

A 14.6.18+2 MgO fertilizer, free from chlorine, was produced by operating continuously as follows (the specified amounts refer to a metric ton of final product).

145 kg. of a commercial solution of Formurea 80, 253 kg. of urea (46% of N), and 100 kg. of water were uniformly mixed and brought to a temperature of 20°C in an open reactor under stirring, thereby obtaining

**0 095 913**

a solution having a molar ratio of urea/formaldehyde of 1.73:1 and a molar ratio of water/urea of 1.50:1, with a pH of 6.0—6.1.

The solution was transferred through an overflow into a second open reactor under stirring, where 8.0 kg of an aqueous solution of $H_3PO_4$ (4% of $P_2O_5$) were added, regulating the addition in order to obtain a pH of 3.2 in the reaction mixture.

In this second reactor the temperature became stable at 52°C because of the heat developed by the condensation reaction between urea and formaldehyde. The average residence time of the solution in the reactor was 1 hour and 50 minutes.

The thus produced ureaform suspension, equivalent to 483 kg., was directly fed, always continuously and without stopping the working cycle, into a drum granulator, where 97.2 kg. of an aqueous solution of phosphoric acid (36% of $P_2O_5$), 161 kg, of 0.18.0. superphosphate, 10 kg. of urea (40% of N), 371 kg. of potassium sulphate (50% of $K_2O$), and 65 kg. of Kieserite (27% of MgO), together with 4,500 kg. of recycled product (having a moisture content of 1.5%) coming from a preceding processing, were added.

The product pH during the granulation was 5.2 and the temperature 73°C.

The pH stabilization was carried out in the terminal part of the drum granulator by addition of 16 kg. of gaseous ammonia. The product at the granulator outlet had a pH value of 6.0.

The product was successively dried at 95°C and screened, as described in Example 1.

The thus prepared fertilizer was found upon analysis to have the following composition:

| | |
|---|---|
| — ammoniac nitrogen | 1.20% |
| — ureic nitrogen | 6.80% |
| — insoluble nitrogen | 6.20% |
| — total nitrogen | 14.20% |
| — water- and ammonium citrate-soluble $P_2O_5$ | 6.20% |
| — $K_2O$ | 18.20% |
| — total MgO | 2.20% |
| — moisture | 1.50% |
| — activity index | 50 |

The caking, hardness and friability characteristics of the granules were comparable to those of a conventional high-quality NPK fertilizer.

Example 3

A 20.7.20 fertilizer was produced by operating continuously as follows (the specified amounts refer to a metric ton of final product).

145 kg. of a commercial solution of Formurea 80, 253 kg. of urea (46% of N), and 140 kg. of water were uniformly mixed and brought to the temperature of 20°C in an open reactor under stirring, thereby obtaining a solution having a molar ratio of urea/formaldehyde of 1.73:1 and a molar ratio of water/urea of 1.97:1, with a pH of 6.0—6.1.

The solution was transferred through an overflow into a second open reactor under stirring, where 10 kg. of an aqueous solution of phosphoric acid (4% of $P_2O_5$) were added, regulating the addition in order to obtain a pH of 3.0 in the reaction mixture.

In this second reactor the temperature became stable at 52°C because of the heat developed by the condensation reaction between urea and formaldehyde. The average residence time of the solution in the reactor was 2 hours.

The thus produced ureaform suspension, equivalent to 522 kg., was directly fed, always continuously and without stopping the working cycle, into a drum granulator, where 210 kg. of an aqoeous solution of phosphoric acid (36% of $P_2O_5$), 99 kg. of ammonium sulphate (21% of N), 63 kg. of urea, 344 kg. of potassium chloride (60% of $K_2O$), together with 4,000 kg. of recycled product (having a moisture content of 1.5%) coming from a preceding processing, were added.

The pH during the granulation was 4.6 and the temperature 80°C.

The pH stabilization took place in the terminal part of the granulator, by addition of 32 kg. of gaseous ammonia. The pH value at the granulator outlet was 6.2.

The product was successively dried at 95°C and screened, as described in Example 1.

5

The thus prepared fertilizer was found upon analysis to have the following composition:

| | |
|---|---|
| — ammoniac nitrogen | 4.80% |
| — ureic nitrogen | 9.20% |
| — insoluble nitrogen | 6.20% |
| — total nitrogen | 20.20% |
| — water- and ammonium citrate-soluble $P_2O_5$ | 7.20% |
| — $K_2O$ | 20.20% |
| — moisture | 1.5% |
| — activity index | 50 |

The caking, hardness and friability characteristics of the granules were comparable to those of a conventional high-quality NPK fertilizer.

Example 4

A 25.18.0 fertilizer, free from $K_2O$, was produced by operating continuously as follows (the specified amounts refer to a metric ton of final product).

213 kg. of a solution of formurea 80, 372 kg. of urea (46% of N), and 118 kg. of water were uniformly mixed and brought to a temperature of 20°C in an open reactor under stirring, thereby obtaining a solution having a molar ratio of urea/formaldehyde of 1.73:1 and a molar ratio of water/urea of 1.27:1, with a pH of 6.1.

The solution was transferred through an overflow into a second open reactor under stirring, where 9.5 kg. of an aqueous solution of $H_3PO_4$ (1% of $P_2O_5$) were added, regulating the addition in order to obtain a pH of 3.2 in the reaction mixture.

The temperature became stable at 52°C because of the heat developed by the condensation reaction between urea and formaldehyde. The average residence time of the solution in the reactor was 1 hour and 15 minutes.

The thus produced ureaform suspension, equivalent to 680 kg., was directly fed, always continuously, into a granulator where 266.7 kg. of an aqueous solution of $H_3PO_4$ (36% of $P_2O_5$), 208 kg. of 18.46.0 diammonium phosphate, 114 kg. of a diluent material (sand), together with 5,000 kg. of recycled product (having a moisture content of 1.5%) coming from a preceding processing, were added.

The product pH during the granulation was 4.5 and the temperature 70°C.

The product was then ammoniated in the terminal part of the granulator by means of 42 kg. of gaseous ammonia. The pH value at the granulator outlet was 6.2.

The product coming out of the granulator was dried at a temperature of 95°C and successively screened; the fraction comprised between 1 and 4 mm forms the final product.

The thus prepared fertilizer was found upon analysis to have the following composition:

| | |
|---|---|
| — ammoniac nitrogen | 6.60% |
| — ureic nitrogen | 9.50% |
| — insoluble nitrogen | 9.10% |
| — total nitrogen | 25.20% |
| — water- and ammonium citrate-soluble $P_2O_5$ | 18.20% |
| — moisture | 1.5% |
| — activity index | 47 |

The caking, hardness and friability characteristics of the granules were comparable to those of a conventional high-quality NP fertilizer.

**Claims**

1. A process for preparing a fertilizer containing ureaform and at least one other fertilizing substance, characterized by comprising the steps of:

(a) reacting urea and formaldehyde in an aqueous phase at a temperature from 30° to 60°C, in molar ratios of urea/formaldehyde of from 1.2:1 to 2:1 and of water/urea of from 0.7:1 to 10:1, and at a pH of from 2 to 4, by addition of an acid substance;

(b) mixing the thus obtained ureaform aqueous suspension with at least one other fertilizing substance and with a part of the recycled final product, which said part is sufficient to ensure in the mixture a pH from 4 to 5.5, and granulating the mixture at a temperature from 50° to 85°C;

(c) before the granulation ends, increasing the product pH to a value from 5.8 to 7 by addition of an alkaline substance; and

(d) drying the product, and recycling a part thereof to the said step (b).

2. A process as claimed in Claim 1, characterized in that the acid substance added in the step (a) is phosphoric or sulphuric acid, utilized in the form of a dilute aqueous solution.

3. A process as claimed in Claim 1 or 2, characterized in that the alkaline substance added in the step (c) is ammonia or calcium hydroxide.

4. A process as claimed in Claim 3, characterized in that the alkaline substance added in the step (c) is gaseous ammonia.

5. A process as claimed in any of Claims 1 to 4, characterized in that the molar ratio of urea/formaldehyde in the step (a) is from 1.4:1 to 1.8:1.

6. A process as claimed in any of Claims 1 to 5, characterized in that the molar ratio of water/urea in the step (a) is from 1.0:1 to 2.0:1.

7. A process as claimed in any of Claims 1 to 6, characterized in that the pH in the step (a) is from 3.0 to 3.5.

8. A process as claimed in any of Claims 1 to 7, characterized in that the reaction temperature in the step (a) is from 40° to 55°C.

9. A process as claimed in any of Claims 1 to 8, characterized in that the pH value in the step (b) is from 4.5 to 5.5.

10. A process as claimed in any of Claims 1 to 9, characterized in that the granulation temperature in the step (b) is from 70° to 80°C.

11. A process as claimed in any of Claims 1 to 10, characterized in that, in the step (c), the product pH is increased to a value from 6.0 to 6.5.

12. A process as claimed in any of Claims 1 to 11, characterized in that a previously prepared aqueous solution of urea and formaldehyde is fed to the step (a).

13. A process as claimed in any of Claims 1 to 12, characterized in that, in the step (d), the product is dried at a temperature from 85° to 100°C.

## Patentansprüche

1. Verfahren zum Bereiten eines Düngemittels, das Ureaform und mindestens eine weitere Düngesubstanz enthält, dadurch gekennzeichnet, daß man

(a) Harnstoff und Formaldehyd in wässriger Phase bei einer Temperatur von 30 bis 60°C in molaren Verhältnissen von Harnstoff/Formaldehyd von 1,2:1 bis 2:1 und von Wasser/Harnstoff von 0,7:1 bis 10:1 und bei einem pH von 2 bis 4 durch Zugabe einer sauren Substanz umsetzt;

(b) die so erhaltene wässrige Ureaformsuspension mit mindestens einer weiteren Düngesubstanz und mit einem Teil des zurückgeführten Endproduktes, der ausreicht, um in der Mischung einen pH von 4 bis 5,5 sicherzustellen, mischt und die Mischung bei einer Temperatur von 50 bis 85°C granuliert;

(c) vor beendetem Granulieren den pH des Produktes auf einen Wert von 5,8 bis 7 erhöht, indem man eine alkalische Substanz zufügt; und

(d) das Produkt trocknet und einen Teil desselben zur Stufe (b) zurückführt.

2. Verfahren nach Anspruch 1, dadurch gekennzeichnet, daß die in Stufe (a) zugefügte saure Substanz Phosphor- oder Schwefelsäure ist, die in Form einer verdünnten wässrigen Lösung verwendet wird.

3. Verfahren nach Anspruch 1 oder 2, dadurch gekennzeichnet, daß die in Stufe (c) zugefügte alkalische Substanz Ammoniak oder Calciumhydroxid ist.

4. Verfahren nach Anspruch 3, dadurch gekennzeichnet, daß die in Stufe (c) zugefügte alkalische Substanz gasförmiger Ammoniak ist.

5. Verfahren nach einem der Ansprüche 1 bis 4, dadurch gekennzeichnet, daß das molar Verhältnis von Harnstoff/Formaldehyd in Stufe (a) von 1,4:1 bis 1,8:1 beträgt.

6. Verfahren nach einem der Ansprüche 1 bis 5, dadurch gekennzeichnet, daß das molare Verhältnis von Wasser/Harnstoff in Stufe (a) von 1,0:1 bis 2,0:1 beträgt.

7. Verfahren nach einem der Ansprüche 1 bis 6, dadurch gekennzeichnet, daß der pH in Stufe (a) von 3,0 bis 3,5 beträgt.

8. Verfahren nach einem der Ansprüche 1 bis 7, dadurch gekennzeichnet, daß die Reaktionstemperatur in Stufe (a) von 40 bis 55°C beträgt.

9. Verfahren nach einem der Ansprüche 1 bis 8, dadurch gekennzeichnet, daß der pH Wert in Stufe (b) von 4,5 bis 5,5 beträgt.

10. Verfahren nach einem der Ansprüche 1 bis 9, dadurch gekennzeichnet, daß die Granulierungstemperatur in Stufe (b) 70 bis 80°C beträgt.

7

**0 095 913**

11. Verfahren nach einem der Ansprüche 1 bis 10, dadurch gekennzeichnet, daß in Stufe (c) der pH des Produktes auf einen Wert von 6,0 bis 6,5 erhöht wird.

12. Verfahren nach einem der Ansprüche 1 bis 11, dadurch gekennzeichnet, daß eine vorher hergestellte wässrige Lösung aus Harnstoff und Formaldehyd in Stufe (a) eingeführt wird.

13. Verfahren nach einem der Ansprüche 1 bis 12, dadurch gekennzeichnet, daß in Stufe (d) das Produkt bei einer Temperatur von 85 bis 100°C getrocknet wird.

## Revendications

1. Un procédé de préparation d'un engrais contenant de "l'ureaform" et au moins une autre substance fertilisante, caractérisé par les étapes suivantes:

(a) on fait réagir l'urée et le formaldéhyde, en phase aqueuse, à une température de 30 à 60°C, dans des rapports molaires urée/formaldéhyde de 1,2/1 à 2/1 et eau/urée de 0,7/1 à 10/1, et à un pH de 2 à 4, par addition d'une substance acide;

(b) on mélange la suspension aqueuse de "l'ureaform" ainsi obtenue avec au moins une autre substance ferilisante et avec une partie du produit final recyclé, cette partie étant suffisante pour assurer, dans le mélange, un pH de 4 à 5,5, et on granule le mélange à une température de 50 à 85°C;

(c) avant la fin de la granulation, on augmente le pH du produit à une valeur de 5,8 à 7 par addition d'une substane alcaline; et

(d) on sèche le produit et on en recycle une partie dans l'étape (b).

2. Un procédé selon la revendication 1, caractérisé en ce que la substance acide ajoutée dans l'étape (a) est l'acide phosphorique ou l'acide sulfurique utilisé sous la forme d'une solution aqueuse diluée.

3. Un procédé selon la revendication 1 ou 2, caractérisé en ce que la substance alcaline ajoutée dans l'étape (c) est l'ammoniac ou l'hydroxyde de calcium.

4. Un procédé selon la revendication 3, caractérisé en ce que la substance alcaline ajoutée dans l'étape (c) est l'ammoniac gazeux.

5. Un procédé selon l'une quelconque des revendications 1 à 4, caractérisé en ce que le rapport molaire urée/formaldéhyde dans l'étape (a) est de 1,4/1 à 1,8/1.

6. Un procédé selon l'une quelconque des revendications 1 à 5, caractérisé en ce que le rapport molaire eau/urée dans l'étape (a) est de 1,0/1 à 2,0/1.

7. Un procédé selon l'une quelconque des revendications 1 à 6, caractérisé en ce que le pH dans l'étape (a) est de 3,0 à 3,5.

8. Un procédé selon l'une quelconque des revendications 1 à 7, caractérisé en ce que la température de réaction dans l'étape (a) est de 40 à 55°C.

9. Un procédé selon l'une quelconque des revendications 1 à 8, caractérisé en ce que la valeur du pH dans l'étape (b) est de 4,5 à 5,5.

10. Un procédé selon l'une quelconque des revendications 1 à 9, caractérisé en ce que la température de granulation dans l'étape (b) est de 70 à 80°C.

11. Un procédé selon l'une quelconque des revendications 1 à 10, caractérisé en ce que, dans l'étape (c), on augmente le pH du produit à une valeur de 6,0 à 6,5.

12. Un procédé selon l'une quelconque des revendications 1 à 11, caractérisé en ce que, dans l'étape (a), on introduit une solution aqueuse préalablement préparée d'urée et de formaldéhyde.

13. Un procédé selon l'une quelconque des revendications 1 à 12, caractérisé en ce que, dans l'étape (d), on sèche le produit à une température de 85°C à 100°C.